# EUROPÄISCHE PATENTSCHRIFT

(11) **EP 0 859 140 B1**
(45) Veröffentlichungstag und Bekanntmachung des Hinweises auf die Patenterteilung: **19.05.2004**
(21) Anmeldenummer: 98101870.8
(22) Anmeldetag: 04.02.1998
(51) Int. Cl.: F02D 41/12, F02D 33/02, F02D 11/10

(54) **Verfahren zum Schutz eines Katalysators**
Method for the protection of a catalyst
Procédé pour la protection d'un catalysateur

(30) Priorität: 13.02.1997 DE 19705478
(43) Veröffentlichungstag der Anmeldung: 19.08.1998
(73) Patentinhaber: ADAM OPEL AG, 65423 Rüsselsheim (DE)
(72) Erfinder: Thyroff, Jürgen, Dipl.-Ing., 55296 Harxheim (DE); Oswald, Helmut, Dipl.-Ing., 55291 Saulheim (DE)
(74) Vertreter: Kümpfel, Heinz, Dipl.-Ing.

(56) Entgegenhaltungen:
- EP-A- 0 257 384
- FR-A- 2 452 002
- US-A- 4 799 466
- US-A- 4 846 127
- PATENT ABSTRACTS OF JAPAN vol. 010, no. 176 (M-491), 20. Juni 1986 (1986-06-20) & JP 61 025941 A (TOYOTA MOTOR CORP), 5. Februar 1986 (1986-02-05)

## Beschreibung

Die Erfindung betrifft ein Verfahren zum Schutz eines Katalysators nach dem Oberbegriff des Patentanspruches 1.

Bekanntlich kann es zu Überhitzung eines Katalysators dann kommen, wenn unverbrannter Kraftstoff zusammen mit Luft in den Katalysator gelangt.

Es wurde festgestellt, daß bei Brennkraftmaschinen mit bestimmten Kurbelgehäuse-Entlüftungs-Konfigurationen im Schubbetrieb Kohlenwasserstoffe aus dem Kurbelgehäuse in den Ansaugtrakt gelangen können. Aufgrund der extrem niedrigen Füllung sowie des im Schubbetrieb schnell ausmagernden Gemisches kann im Motor keine Verbrennung stattfinden, jedoch reagiert dieses Gemisch im Katalysator und führt zu einer unerwünschten Temperaturerhöhung, welche eine Lebensdauerreduzierung des Katalysators zur Folge hat.

Mit DE 40 02 206 wird vorgeschlagen, im Falle eines nicht mehr schließenden Einspritzventils an einem Zylinder einer mehrzylindrigen Brennkraftmaschine das Luft-Kraftstoffgemisch für alle Zylinder anzufetten und Schubabschalten nicht zuzulassen. Dadurch wird sämtlicher Sauerstoff in den normal arbeitenden Zylinder verbrannt. Eine zur Zerstörung des Katalysators führende Reaktion kann vermieden werden. Hinweise zur Abhilfe der Katalysatorüberhitzung infolge Schubabschaltung sind nicht gegeben.

Mit dem Katalysatorschutzverfahren nach DE 40 02 207 ist vorgeschlagen, bei Zündungsaussetzern in einem von mehreren Zylindern einer Brennkraftmaschine die Kraftstoffzufuhr zum betroffenen Zylinder zu unterbrechen und die restlichen Zylinder mit magerem Gemisch zu versorgen.

Dadurch kann kein überschüssiger Kraftstoff zum Katalysator gelangen, sondern ausschließlich überschüssige Luft.

Ein solches Verfahren erfordert eine recht aufwendige zylinderselektive Zündaussetzererkennung. Außerdem ergeben sich durch dieses Verfahren Probleme hinsichtlich einer Überhitzung des Abgaskrümmers. Hinweise zum Vermeiden der Katalysatorüberhitzung infolge Schubabschaltung können auch hier nicht entnommen werden.

Nach der US 4 799 466 A wird für ein Fahrzeug mit Automatikgetriebe vorgeschlagen, durch das Bereitstellen von zusätzlicher Schubluft ein Ausgehen des Motors beim Übergang von Schubabschaltung auf Leerlauf zu verhindern. Maßnahmen zur Katalysatorschutz sind dieser Schrift nicht zu entnehmen.

Die EP 0 257 384 A1 beschäftigt sich mit der Problematik, das es zu Katalysatorschäden kommen kann, wenn die Verbrennung instabil verläuft, d. h. wenn z. B. Aussetzer auftreten. In solchen Fällen kann es nämlich zu starken exothermen Reaktionen kommen, die zu einer entsprechenden Übertemperatur am Katalysator führen. Eine potentielle Gefährdung des Katalysators in Folge einer Schubabschaltung ist der Offenlegungsschrift nicht zu entnehmen.

Der Erfindung liegt die Aufgabe zugrunde, ein Verfahren zum Schutz eines Katalysators im Abgasstrang einer fremdgezündeten Brennkraftmaschine vor Überhitzung bei Schubbetrieb zu schaffen, welches mit einfachen Mitteln realisierbar ist.

Die Erfindung löst diese Aufgabe mit den Merkmalen des Anspruches 1. Vorteilhafte Weiterbildungen der Erfindung sind Gegenstand der Unteransprüche.

Ausführungsbeispiele der Erfindung sind nachstehend anhand von Flussdiagrammen erläutert.
- Figur 1: zeigt ein Flussdiagramm mit der Darstellung wesentlicher Einzelschritte,
- Figur 2: zeigt ein Flussdiagramm in verallgemeinerter Form.

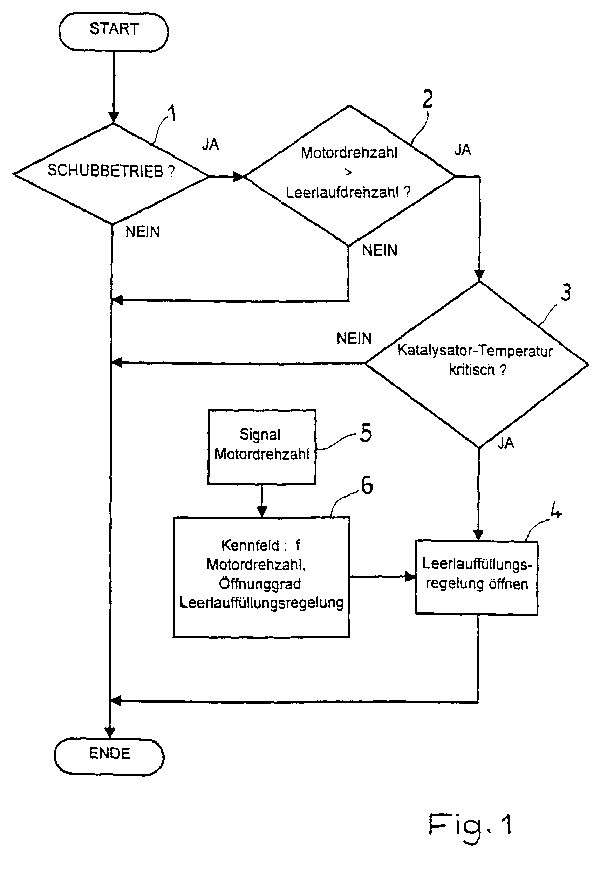

Wie aus Figur 1 ersichtlich, wird in einem ersten Schritt 1 ermittelt, ob Schubbetrieb vorliegt. Liegt kein Schubbetrieb vor, dann wird das Verfahren beendet. Wird Schubbetrieb erkannt, dann wird mit Schritt 2 ermittelt, ob dabei die Brennkraftmaschine eine Drehzahl größer als die Leerlaufdrehzahl aufweist. Ist dies nicht der Fall, wird das Verfahren beendet. Liegt eine größere Drehzahl vor, dann wird mit Schritt 3 festgestellt, ob die Temperatur des Katalysators so hoch ist, dass bei weiterer Erhöhung der Temperatur eine Beschädigung auftreten kann. Liegt die Katalysatortemperatur unter dieser kritischen Temperatur, dann wird das Verfahren beendet.

Ist diese kritische Temperatur erreicht, dann wird mit Schritt 4 die Leerlauffüllungsregelung der Brennkraftmaschine in Abhängigkeit von der aktuellen Motordrehzahl geöffnet. Dazu wird die Motordrehzahl bei Schritt 5 erfasst und bei Schritt 6 mit einem Kennfeld verglichen, welches eine Funktion f von Motordrehzahl und Öffnungsgrad der Leerlauffüllungsregelung darstellt. Je höher die aktuelle Motordrehzahl ist, um so größer ist der Öffnungsgrad der Leerlauffüllungsregelung. Jedoch darf dieser Öffnungsgrad nur so groß sein, dass bei Entlastung der Brennkraftmaschine, z. B. bei Auskuppeln an einem Kraftfahrzeug und schließender Drosselklappe, die Motordrehzahl noch ausreichend schnell abfällt. Der Abfall der Drehzahl kann durch geeignete Maßnahmen, wie z. B. durch eine Spätverstellung des Zündzeitpunktes oder eine Kraftstoffabschaltung an den Einspritzdüsen oder durch beide Maßnahmen unterstützt werden.

Die Wirkungsweise des Verfahrens ist nachstehend beschrieben. Falls im Schub die Leerlaufdrehzahlregelung aktiviert ist, stellt sich infolge einer Drehzahl größer als Leerlaufdrehzahl ein dauerhaft geringerer Luftdurchsatz ein. Die Kohlenwasserstoffe aus dem Kurbelgehäuse sowie von den Wandbereichen der Zylinder werden mit dieser geringen Frischluftmasse nahezu unverbrannt in den Auspuff ausgeschoben. Je nach Kohlenwasserstoff-Massestrom aus dem Kurbelgehäuse ist das Gesamtgemisch zu Beginn der Schubphase fett, insbesondere nach Betrieb mit Anreicherung, z. B. bei Volllast. Aufgrund des Luftmangels findet keine vollständige Verbrennung statt und der Katalysator ist infolge des Luftmangels nicht in der Lage, die überschüssigen Kohlenwasserstoffe umzusetzen. Diese tragen als Inertgas zunächst zur Kühlung des Katalysators bei. Trotzdem stellt sich entsprechend der geringeren exothermen Reaktion ein flacher Temperaturanstieg ein. Mit zunehmender Schubdauer sinkt die HC-Konzentration und entsprechend steigt der Luftanteil des in den Brennraum gelangenden Kurbelgehäusegases. Das Luftverhältnis des Gemisches im Katalysator nähert sich von Werten Lambda kleiner eins immer mehr an Lambda gleich eins an. Bei in Summe stöchiometrischem Mischungsverhältnis stellt sich die maximale Katalysatoraufheizung ein. Dabei werden in den örtlichen Reaktionszentren der Beschichtung sehr hohe Temperaturen erreicht, die zu einer Schädigung führen. Mit weiter absinkenden HC-Werten steigt das Luftverhältnis über Lambda gleich eins an. Die überschüssige Luft kühlt den Katalysator. Da durch das vorbeschriebene Verfahren in den kritischen Drehzahlbereichen der Luftdurchsatz über die Leerlauffüllungsregelung erhöht wird, stellt sich immer ein Lambda größer eins ein. Infolge dieses Luftüberschusses sinkt die Temperatur im Katalysator sofort ab und die schädigende Temperaturüberhöhung bleibt aus.

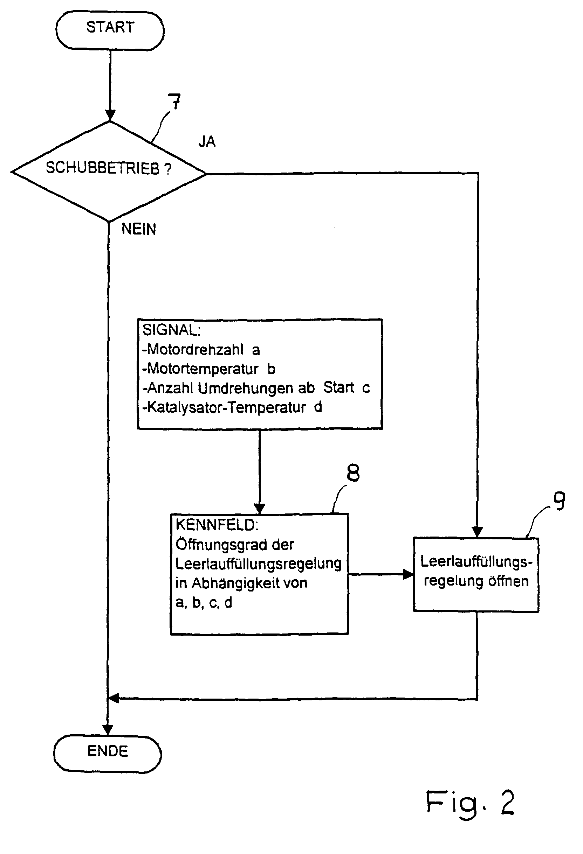

Das erfindungsgemäße Verfahren kann auch von weiteren Motorparametern beeinflusst sein, wie dies z. B. Figur 2 in einem Flussdiagramm zeigt.

Nachdem in einem ersten Schritt 7 ermittelt ist, dass Schubbetrieb vorliegt, kann von einem Kennfeld 8, welches die Abhängigkeit des Öffnungsgrades der Leerlauffüllungsregelung von aktuellen Motorbetriebswerten, wie z. B. Motordrehzahl a, Motortemperatur b, Anzahl der abgelaufenen Umdrehungen ab Start c, Katalysatortemperatur d über Sensorsignale 9 berücksichtigt, der Öffnungsgrad der Leerlauffüllungsregelung vorgegeben und im Schritt 9 vollzogen werden.

Das Verfahren ist mit einfachen technischen Mitteln und ohne zusätzliche Bauteile realisierbar.

## Patentansprüche

1. Verfahren zum Schutz eines Katalysators im Abgasstrang einer fremdgezündeten Brennkraftmaschine vor Überhitzung bei Schubbetrieb der Brennkraftmaschine, **dadurch gekennzeichnet, dass** bei Übergang von Last auf Schub eine zusätzliche Öffnung der Leerlauffüllungsregelung über die Leerlaufposition hinaus erfolgt und während des Schubbetriebes zumindest bei Drehzahlen größer als die Leerlaufdrehzahl und bei Temperaturen des Katalysators, welche größer oder gleich einer kritischen Temperatur sind, erhalten bleibt.

2. Verfahren nach Anspruch 1, **dadurch gekennzeichnet, dass** das Maß der zusätzlichen Öffnung der Leerlauffüllungsregelung in Abhängigkeit von der aktuellen Motordrehzahl derart erfolgt, dass bei hoher Motordrehzahl eine größere zusätzliche Öffnung gegenüber einer niedrigen Motordrehzahl eingestellt wird.

3. Verfahren nach Anspruch 1 und 2, **dadurch gekennzeichnet, dass** die Öffnung der Leerlauffüllungsregelung in einem Maß erfolgt, dass beim Entlasten der Brennkraftmaschine, d.h. Auskuppeln und Schließen der Drosselklappe, die Motordrehzahl ausreichend schnell abfällt.

4. Verfahren nach Anspruch 3, **dadurch gekennzeichnet, dass** der Rückgang der Motordrehzahl durch Spätverstellung des Zündzeitpunktes und/oder durch Kraftstoffabschaltung unterstützt wird.

## Claims

1. Method for the protection of a catalyst in the exhaust train of a spark-ignition internal combustion engine against overheating during coasting of the engine, **characterised in that** upon changing over from load to coasting an additional opening of the idling level regulation means is effected beyond the idling position, and is maintained during coasting at least at speeds greater than the idling speed and at temperatures of the catalyst which are greater than or equal to a critical temperature.

2. Method according to claim 1, **characterised in that** the degree of additional opening of the idling level regulation means is effected as a function of the current engine speed in such a way that at high engine speed a greater additional opening is set than at a lower engine speed.

3. Method according to claims 1 and 2, **characterised in that** opening of the idling level regulation means is effected to a degree such that, when the load on the engine is relieved, i.e. upon disengagement of the clutch and closing of the throttle valve, the engine speed drops sufficiently rapidly.

4. Method according to claim 3, **characterised in that** the reduction of engine speed is assisted by spark retard of the ignition time and/or by shutting off the fuel.

## Revendications

1. Procédé pour la protection d'un catalyseur dans le système de gaz d'échappement d'un moteur à combustion à allumage externe, pour éviter la surchauffe en cas de fonctionnement sur la lancée (marche en retenue) du moteur à combustion interne, **caractérisé en ce que**, en cas de passage du fonctionnement sous charge au fonctionnement sur la lancée, une ouverture supplémentaire de la régulation de remplissage au ralenti est effectuée par l'intermédiaire de la position de marche au ralenti et reste conservée, pendant le fonctionnement sur la lancée, au moins pour des vitesses de rotation supérieures à la vitesse de rotation de marche au ralenti et pour des températures du catalyseur supérieures ou identiques à une température critique.

2. Procédé selon la revendication 1, **caractérisé en ce que** le degré d'ouverture supplémentaire de la régulation de remplissage au ralenti est déterminé en fonction de la vitesse de rotation réelle du moteur, de manière que, en cas de vitesse de rotation augmentée du moteur, une ouverture supplémentaire plus grande, par rapport à celle d'une faible vitesse de rotation du moteur, soit réglée.

3. Procédé selon la revendication 1 et 2, **caractérisé en ce que** l'ouverture de la régulation de remplissage au ralenti est réalisée à un degré tel que, en cas de décharge du moteur à combustion interne, c'est-à-dire de débrayage et de fermeture du clapet d'étranglement ou papillon des gaz, la vitesse de rotation du moteur est diminuée suffisamment rapidement.

4. Procédé selon la revendication 3, **caractérisé en ce que** la réduction de la vitesse de rotation du moteur est favorisée par réglage en avance de l'instant d'allumage et/ou par une mise hors service de l'alimentation en carburant.
